# EUROPEAN PATENT SPECIFICATION

(11) **EP 3 804 866 B1**
(45) Date of publication and mention of the grant of the patent: **15.11.2023**
(21) Application number: 20200229.1
(22) Date of filing: 06.10.2020
(51) Int. Cl.: B08B 3/02, B60S 1/34, B60S 1/36, B63B 59/10, B60S 1/44

(54) **CLEANING SYSTEM, METHOD FOR CLEANING AND USE OF A CLEANING SYSTEM**
REINIGUNGSSYSTEM, REINIGUNGSVERFAHREN UND VERWENDUNG EINES REINIGUNGSSYSTEMS
SYSTÈME DE NETTOYAGE, PROCÉDÉ DE NETTOYAGE ET UTILISATION D'UN SYSTÈME DE NETTOYAGE

(30) Priority: 10.10.2019 EP 19202439
(43) Date of publication of application: 14.04.2021
(73) Proprietor: CUSTOMARE PRODUCTION OY, 20320 Turku (FI)
(72) Inventor: LAITINEN, Kimmo, 20100 Turku (FI)
(74) Representative: Laine IP Oy

(56) References cited:
- EP-A1- 0 538 521
- EP-A1- 3 259 538
- WO-A1-2015/082072
- WO-A1-2018/142389
- DE-U1- 9 111 395
- JP-A- 2014 223 564
- US-A1- 2019 248 338

## Description

### FIELD

The present invention relates to a cleaning system. In particular, certain embodiments of the present invention relate to a cleaning system for cleaning of window surfaces of a ship.

Further, the present invention relates to a method for cleaning a surface of an object. In particular, certain embodiments of the present invention relate to a method for cleaning of window surfaces of a ship.

Examples of the present invention relate to a use of a cleaning system in connection with cleaning of window surfaces of a ship.

### BACKGROUND

Different cleaning systems for cleaning of surfaces are commonly known. Some known cleaning systems are designed for cleaning of surfaces such as window surfaces of ships. Cleaning of window surfaces of ships is not only required for visibility and safety reasons but instead or in addition for passenger experience. In these days e.g. passenger vessels and cruise ships are often equipped with complex window structures such as domes or other similar structures which have to be regularly cleaned.

Three-dimensional window structures of ships are typically cleaned utilizing manually operated pressure cleaners. The pressure cleaners operate with high pressure, typically with 15 bar or more water pressure. The pressure may be, for example 100 bar or 200 bar.

For planar window structures different devices for cleaning have been developed so far. Document DE 3538078 A1, for example, discloses a cleaning apparatus for cleaning of planar window surfaces of passenger ships having several rows of windows which are arranged one above the other and extend along the side walls of the ship. The apparatus has a sliding carriage which rolls on rails provided on the ship and is moved along the side walls of the ship. A frame which carries the sliding carriage includes one or more spray devices to which several spray nozzles are fastened. The spray nozzles are arranged opposite to the windows and clean them with high pressure.

Documents WO 2015/082072 A1 and DE 9111395 U1 each describe a cleaning system comprising a first guiding and a second guiding as well as a first part movably coupled to the first guiding and a second part movably coupled to a second guiding. The first part is movable relative to the second part. The device further comprises a drive system for simultaneously moving the first part and the second part along the first guiding and the second guiding.

Document WO 2018/142389 A1 discloses a cleaning system for cleaning a panel. The system comprises a hollow brush containing a cleaning fluid. The system further comprises at least one cleaning fluid distribution mechanism connected to the hollow brush. Additionally, the system comprises a motor and a translation mechanism supporting at least one end of the hollow brush and configured to move the hollow brush, the cleaning fluid distribution mechanism and the motor across the panel. Furthermore, a fluid power source is provided.

EP 3259538 A1 describes a cleaning apparatus comprising a brush assembly and a leading carriage attached to the brush assembly and configured to drive the brush assembly. The apparatus further comprises a trailing carriage assembly configured to move along a track. A height of the brush assembly is adjustable by adjusting a position of the leading and trailing carriage assembly vertical support rods.

Additionally, document WO 2014/185082 A1 discloses a cleaning assembly comprising a frame and several wheels. The assembly further comprises a pipe and nozzle for supplying water for cleaning a surface. Additionally, the assembly comprises a blade for wiping said surface.

In view of the foregoing, it would be beneficial to provide a cleaning system for cleaning of surfaces of an object, for example for cleaning of window surfaces of a ship. In particular, it would be beneficial to provide a cleaning system for cleaning of complex three-dimensional window structures of a ship.

### SUMMARY OF THE INVENTION

The invention is defined by the features of the independent claims. Some specific embodiments are defined in the dependent claims.

According to a first aspect of the present invention, there is provided a cleaning system comprising a first guiding configured to be coupled to an object, a second guiding configured to be coupled to the object such that the second guiding is arranged at a distance from the first guiding, a third guiding configured to be coupled to the object such that the third guiding is arranged at a distance from the first guiding and the second guiding, a first part movably coupled to the first guiding, a second part movably coupled to the second guiding, a third part coupled to the second part, wherein the second part and the third part are coupled to each other via a first joint, a fourth part movably coupled to the third guiding, wherein the first part is movable relative to the second part and the third part is movable relative to the fourth part, and wherein cleaning elements are coupled to each of the first part, the second part, the third part and the fourth part, and wherein the system further comprises at least a first drive system configured to simultaneously move the first part, the second part, the third part and the fourth part along the first guiding, the second guiding and the third guiding, and wherein the parts of the cleaning system are configured to simultaneously move over a curved window surface.

Various embodiments of the first aspect may comprise at least one feature from the following bulleted list:
- the first part is movable in relation to the second part in a telescope-like manner
- the first part is movable in relation to the second part in a direction perpendicular or substantially perpendicular to a direction of movement of the cleaning system
- the first part is movable in relation to the second part in a longitudinal direction of the second part
- the cleaning elements comprise bristles, rubber lips, deck cloth or garment or any other suitable elements for cleaning of a surface
- the cleaning elements are arranged to be brought into mechanical contact with a surface to be cleaned
- the cleaning system comprises at least one fresh water connector for supplying at least one of the first part and the second part with fresh water for cleaning a surface of the object
- the cleaning system is configured to be coupled to a fresh water supply system of a ship
- at least one of the first part and the second part comprises a plurality of fresh water outlets
- the cleaning system is configured to guide fresh water from the at least one fresh water connector to the plurality of fresh water outlets
- the second part is coupled to the second guiding via the first joint in the form of a first ball joint
- the third part is movable in relation to the fourth part in a telescope-like manner
- the third part is movable in relation to the fourth part in a direction perpendicular or substantially perpendicular to a direction of movement of the cleaning system
- the third part is movable in relation to the fourth part in a longitudinal direction of the fourth part
- the second joint is a hinge joint
- the fourth part is coupled to the third guiding via a third joint in the form of a second ball joint
- cleaning elements are coupled to each of the first part, the second part, the third part and the fourth part
- at least one of the first part, the second part, the third part and the fourth part comprises a plurality of fresh water outlets
- the cleaning system is configured to be coupled to a part of a ship
- the cleaning system is configured to receive fresh water with a water pressure of less than 10 bar
- the cleaning system is configured to receive fresh water with a water pressure of more than 15 bar, for example 100 - 200 bar
- the parts of the cleaning system are configured to simultaneously move over a window surface, for example over a window surface of a ship
- the cleaning system comprises a remote control for remotely operating the cleaning system
- the cleaning system comprises a user interface for remotely operating the cleaning system
- the cleaning system comprises a first drive system coupled to the first guiding
- the cleaning system comprises a second drive system coupled to the third guiding
- the cleaning system comprises at least one energy chain
- the cleaning system comprises a first energy chain coupled to the first drive system at one end and to an energy source at another end
- the cleaning system comprises a second energy chain coupled to the second drive system at one end and to the energy source at another end
- the cleaning system comprises an angle sensor configured to provide information about an orientation of at least one of the first part, the second part, the third part and the fourth part relative to a reference object, a plane or a vector such as a gravity vector
- the cleaning system comprises an angle sensor configured to provide information about an orientation of the first part in relation to the first guiding

According to a second aspect of the present invention, there is provided a method for cleaning a surface of an object, the method comprising coupling a first guiding to an object, coupling a second guiding to the object such that the second guiding is arranged at a distance from the first guiding, coupling a third guiding to the object such that the third guiding is arranged at a distance from the first guiding and the second guiding, coupling a first part movably to the first guiding, coupling a second part movably to the second guiding, coupling a third part to the second part, wherein the second part and the third part are coupled to each other via a first joint, coupling a fourth part movably to the third guiding, coupling cleaning elements to each of the first part, the second part, the third part and the fourth part, simultaneously moving the first part, the second part, the third part and the fourth part along the first guiding, the second guiding and the third guiding by at least a first drive system, wherein the first part is movable relative to the second part and the third part is movable relative to the fourth part, and wherein the parts of the cleaning system are simultaneously moved over a curved window surface.

Various embodiments of the second aspect may comprise at least one feature from the following bulleted list:
- sliding of the first part relative to the second part
- moving of the first part in relation to the second part in a telescope-like manner
- moving of the first part in relation to the second part in a direction perpendicular or substantially perpendicular to a direction of movement of the cleaning system
- moving the first part in relation to the second part in a longitudinal direction of the second part
- replacing used cleaning elements by new cleaning elements
- arranging the cleaning elements such that the cleaning elements are brought into mechanical contact with a surface to be cleaned
- coupling the cleaning system to a fresh water supply system of a ship
- guiding fresh water from at least one fresh water connector to a plurality of fresh water outlets
- coupling the second part to the second guiding via a first joint in the form of a first ball joint
- sliding of the third part relative to the fourth part
- moving the third part in relation to the fourth part in a telescope-like manner
- moving the third part in relation to the fourth part in a direction perpendicular or substantially perpendicular to a direction of movement of the cleaning system
- moving the third part in relation to the fourth part in a longitudinal direction of the fourth part
- coupling the fourth part to the third guiding via a third joint in the form of a second ball joint
- coupling the cleaning system to a part of a ship
- receiving fresh water with a water pressure of less than 10 bar
- simultaneously moving parts of the cleaning system over a window surface, for example over a window surface of a ship
- remotely operating the cleaning system by a remote control
- remotely operating the cleaning system by a user interface
- filtering the fresh water prior to use in the cleaning system
- determining an orientation of at least one of the first part, the second part, the third part and the fourth part relative to a reference object, a plane or a vector such as a gravity vector by an angle sensor
- determining an orientation of the first part relative to the first guiding by an angle sensor

According to an example, there is provided a use of a cleaning system in accordance with any one of claims 1-13 in connection with cleaning of a surface of a ship or building. According to a certain embodiment, the use is directed to cleaning of a window surface of a ship, for example a curved surface of a dome, a planar surface or any other structure.

Considerable advantages are obtained by means of certain embodiments of the present invention. A cleaning system, a method for cleaning a surface of an object and a use of a cleaning system are provided.

According to certain embodiments, the cleaning system is capable of cleaning window surfaces of complex three-dimensional structures such as domes or other structures. The cleaning system is particularly useful for cleaning of curves surfaces. Cleaning of the cleaning surface takes place utilizing fresh water and cleaning elements which are brought in contact with the cleaning surface.

Parts of the cleaning system are allowed to move relative to each other, and thus guide rails of the system do not have to be fixedly attached exactly parallel to each other. Consequently, installation of the system can be carried out quickly and cost-efficiently.

According to certain embodiments, the cleaning system can be connected to a standard fresh water supply system of a ship. Increasing of water pressure by a pump is not required. Fresh water is guided to the water outlets of the cleaning system, and thus to the cleaning area. The window is cleaned by moving the cleaning system with its cleaning elements along the cleaning area.

An environment-friendly window cleaning system is provided as no cleaning agents have to be added to the supplied fresh water. However, specific cleaning agents may be provided according to certain embodiments.

According to certain embodiments, the cleaning system may be remotely controlled by an operator. According to certain other embodiments, the cleaning system may automatically carry out a preset program. According to even further embodiments, the cleaning system may be controlled by a control unit.

### BRIEF DESCRIPTION OF THE DRAWINGS

FIGURE 1 illustrates a schematic view of a cleaning system in accordance with at least some embodiments of the present invention,
FIGURE 2 illustrates a schematic perspective view of a cleaning system in accordance with at least some embodiments of the present invention,
FIGURE 3 illustrates a schematic perspective view of another cleaning system in accordance with at least some embodiments of the present invention,
FIGURE 4 illustrates a schematic perspective view of a first detail of a cleaning system in accordance with at least some embodiments of the present invention,
FIGURE 5 illustrates a schematic perspective view of a second detail of a cleaning system in accordance with at least some embodiments of the present invention,
FIGURE 6 illustrates a schematic perspective view of a third detail of a cleaning system in accordance with at least some embodiments of the present invention,
FIGURE 7 illustrates a schematic perspective view of a further cleaning system in accordance with at least some embodiments of the present invention,
FIGURE 8 illustrates a schematic perspective view of an even further cleaning system in accordance with at least some embodiments of the present invention,
FIGURE 9 illustrates specific details of a first drive system of a cleaning system in accordance with at least some embodiments of the present invention,
FIGURE 10 illustrates specific details of a second drive system of a cleaning system in accordance with at least some embodiments of the present invention,
FIGURE 11 illustrates a schematic perspective view of a yet further cleaning system in accordance with at least some embodiments of the present invention,
FIGURE 12 illustrates specific details of a drive system of a cleaning system in accordance with at least some embodiments of the present invention, and
FIGURE 13 illustrates specific details of a further drive system of a cleaning system in accordance with at least some embodiments of the present invention.

### EMBODIMENTS

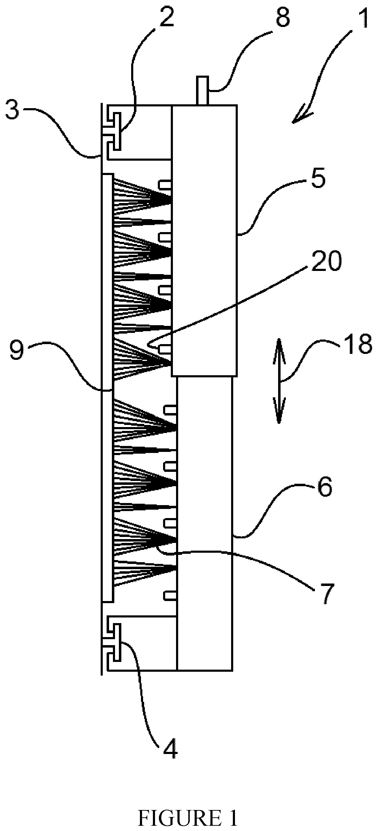

In FIGURE 1 a schematic view of a cleaning system 1 in accordance with at least some embodiments of the present invention is illustrated. An object 3 such as a passenger ship may have rows of windows which are arranged one above the other and extend along the side walls of the ship.

The cleaning system 1 comprises a first guiding 2 configured to be coupled to the object 3. Additionally, the cleaning system comprises a second guiding 4 configured to be coupled to the object 3 such that the second guiding 4 is arranged at a distance from the first guiding 2. According to this embodiment, the first guiding 2 and the second guiding 4 are ideally arranged parallel to each other. However, the first guiding 2 and second guiding 4 are typically not exactly parallel arranged to each other due to the substantial length of the ship and/or curved outer surfaces of the ship. In fact, the first guiding 2 and the second guiding 4 are typically arranged only substantially parallel to each other. Arrangement of the first guiding 2 and the second guiding 4 only substantially parallel to each other further reduces installation time.

The cleaning system 1 further comprises a first part 5 movably coupled to the first guiding 2 and a second part 6 movably coupled to the second guiding 4. The first part 5 is movable relative to the second part 6 as indicated by arrow 18. The first part 5 may be movable relative to the second part 6 in a telescope-like manner, for instance. In other words, the first part 5 is movable relative to the second part 6 in a direction perpendicular or substantially perpendicular to a direction of movement of the cleaning system 1 as indicated by arrow 17. Both the first part 5 and the second part 6 may each comprise a hollow profile. The cross-section of the hollow profiles may be, for example, rectangular. The second part 6 may be partially inserted into the hollow first part 5, for instance.

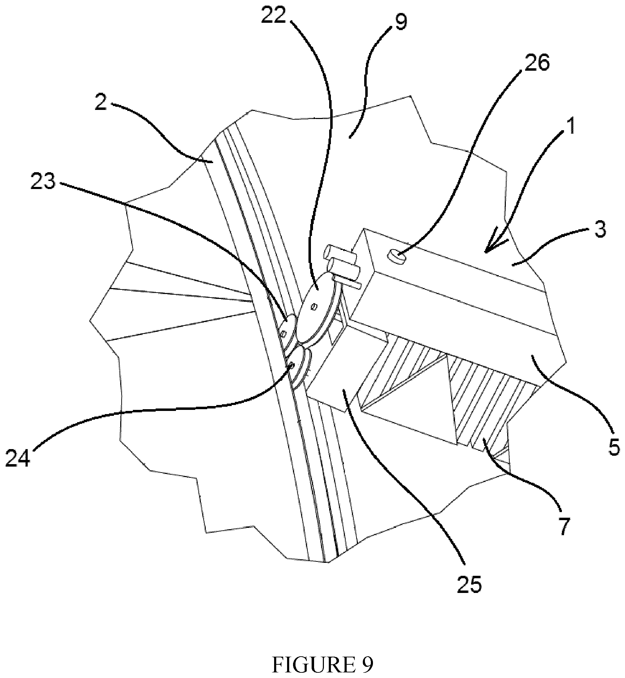

The cleaning system 1 further comprises a drive system (not shown) configured to simultaneously move the first part 5 and the second part 6 along the first guiding 2 and the second guiding 4 as indicated by arrow 17. Drive systems for driving a structure along a guiding are commercially available. However, specific details of a drive system, which may be utilized in connection with certain embodiments of the present invention, are described in connection with FIGURES 9 to 13.

Furthermore, the cleaning system 1 comprises cleaning elements 7 coupled to each of the first part 5 and the second part 6. Examples of cleaning elements 7 are bristles, rubber lips, deck cloth, garment or any other elements suitable for cleaning of a surface 9. The cleaning elements 7 are arranged to be brought into mechanical contact with the surface 9 to be cleaned, for example with window surfaces of a ship.

Additionally, the cleaning system comprises at least one fresh water connector 8 for supplying at least one of the first part 5 and the second part 6 with fresh water for cleaning the surface 9 of the object 3. The fresh water connector 8 may be connected to a fresh water supply system (not shown) of the ship, for example by a hose. At least one of the first part 5 and the second part 6 may comprise a plurality of fresh water outlets 20. The cleaning system 1 is configured to guide fresh water from the at least one fresh water connector 8 to the plurality of fresh water outlets 20. According to certain embodiments, fresh water with a pressure of less than 10 bar is provided to the fresh water connector 8. In other words, the fresh water supply system of the ship may be used for cleaning of the surface 9. It is not required to provide water for cleaning the surface 9 with high pressure. According to certain other embodiments, fresh water with a water pressure of more than 10 bar or more than 15 bar is received by the fresh water connector. The water pressure may be in the range between 100 - 200 bar, for instance. The water can then be sprayed under high pressure to the surface to be cleaned. The water outlets 20 may be designed as spray nozzles in such a case. According to certain embodiments, the fresh water is pre-treated or filtered prior to use in the system 1. In particular, minerals may be removed from the fresh water so that no stripes remain on the glass surface after cleaning.

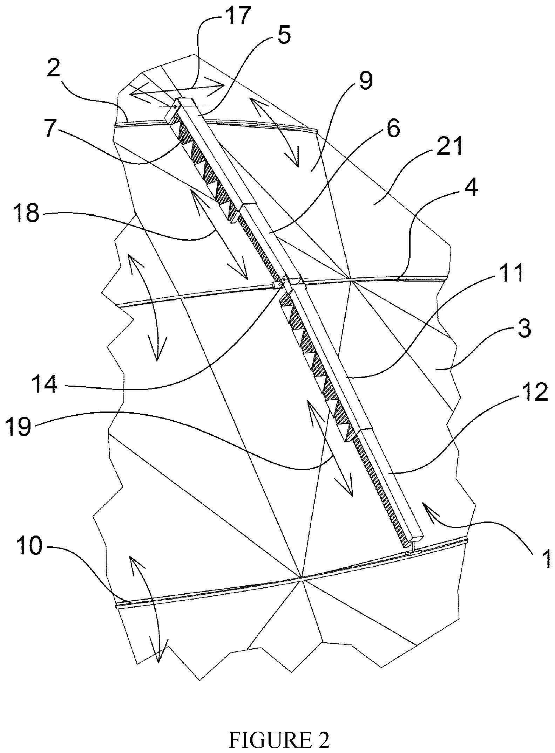

In FIGURE 2 a schematic perspective view of a cleaning system 1 in accordance with at least some embodiments of the present invention is illustrated. The shown cleaning system 1 is coupled to an object 3. The object 3 may be, for example, a dome located on a cruise ship or another three-dimensional window structure of a ship. The structure is formed by a plurality of window elements 21.

The shown cleaning system 1 comprises a first guiding 2 configured to be coupled to the object 3. Further, the cleaning system 1 comprises a second guiding 4 configured to be coupled to the object 3 such that the second guiding 4 is arranged at a distance from the first guiding 2. Additionally, the cleaning system 1 comprises a third guiding 10 configured to be coupled to the object 3 such that the third guiding 10 is arranged at a distance from the second guiding 4. The distance between the first guiding 2 and the second guiding 4 may be, for example, in the range between 0.5 m - 5 m. The distance between the second guiding 4 and the third guiding may be, for example, in the range between 0.5 m - 5 m. The distance between the first guiding 2 and the second guiding 4 and/or the distance between the second guiding 4 and the third guiding 10 may be constant or varying along the curved structure.

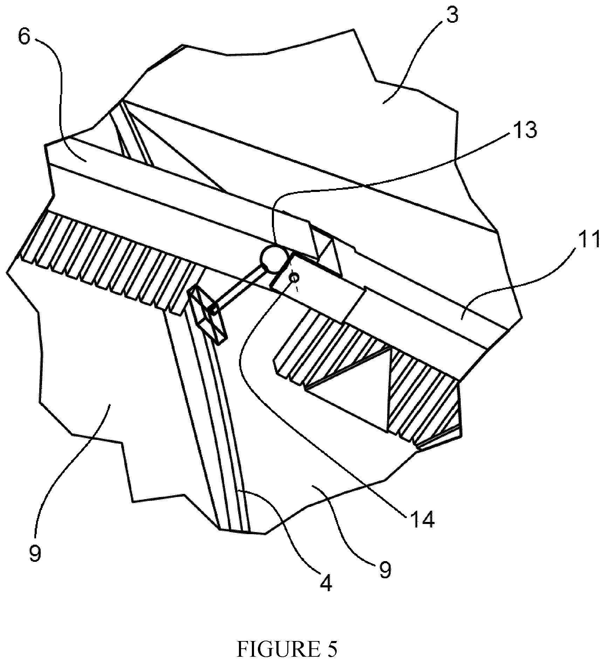

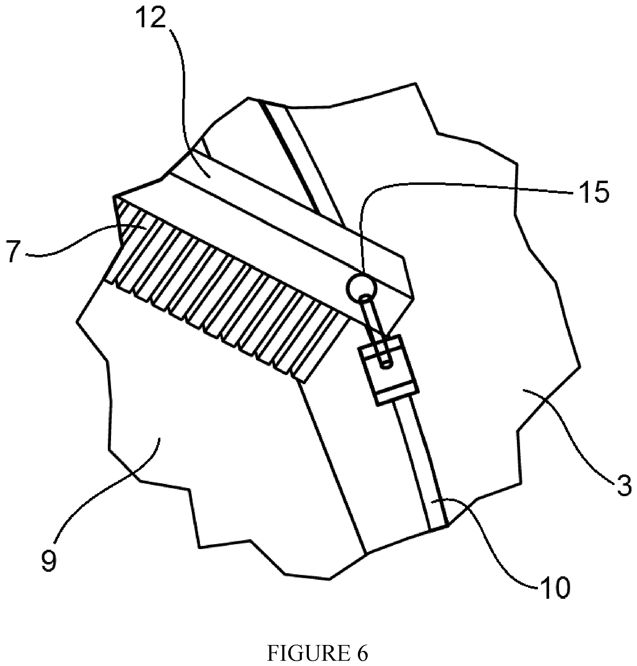

The cleaning system 1 further comprises a first part 5 movably coupled to the first guiding 2 and a second part 6 movably coupled to the second guiding 4. The first part 5 is movable relative to the second part 6 as indicated by arrow 18. The second part 6 may be coupled to the second guiding 4 via a first joint in the form of a first ball joint 13 as illustrated in FIGURE 5. Additionally, a third part 11 is coupled to the second part 6. The second part 6 and the third part 11 are coupled to each other via a second joint 14. The second joint 14 is typically a hinge joint. Of course, the third part 11 may be coupled to the second guiding 4 and the second part 6 may be coupled to the third part 11 via the second joint 14 as an alternative. Further, a fourth part 12 is movably coupled to the third guiding 10. The fourth part 12 is coupled to the third guiding 10 via a third joint in the form of a second ball joint 15 as illustrated in FIGURE 6. The first part 5, the second part 6, the third part 11 and the fourth part 12 may each comprise a hollow profile. The cross-section of the hollow profiles may be, for example, rectangular. The second part 6 may be partially inserted into the hollow first part 5 and the fourth part 12 may be partially inserted into the third part 11, for instance.

The first part 5 may be movable relative to the second part 6 as indicated by arrow 18. The first part 5 may be movable relative to the second part 6 in a telescope-like manner, for instance. In other words, the first part 5 is movable relative to the second part 6 in a direction perpendicular or substantially perpendicular to a direction of movement of the cleaning system 1 as indicated by arrow 18. Furthermore, the third part 11 may be movable relative to the fourth part 12 as indicated by arrow 19. The third part 11 may be movable relative to the fourth part 12 in a telescope-like manner, for instance. In other words, the third part 11 may be movable relative to the fourth part 12 in a direction perpendicular or substantially perpendicular to a direction of movement of the cleaning system 1 as indicated by arrow 17.

The cleaning system 1 further comprises a drive system (not shown) configured to simultaneously move the first part 5, the second part 6, the third part 11 and the fourth part 12 along the first guiding 2, the second guiding 4 and the third guiding 10 as indicated by arrow 17. Drive systems for driving a structure along a guiding are commercially available, and are thus not further explained within this document.

Furthermore, the cleaning system 1 comprises cleaning elements 7 coupled to each of the first part 5, the second part 6, the third part 11 and the fourth part 12. Examples of cleaning elements 7 are bristles, rubber lips, deck cloth, garment or any other elements suitable for cleaning of a surface 9 such as a window surface of a structure of a ship. The cleaning elements 7 are arranged to be brought into mechanical contact with the surface 9 to be cleaned.

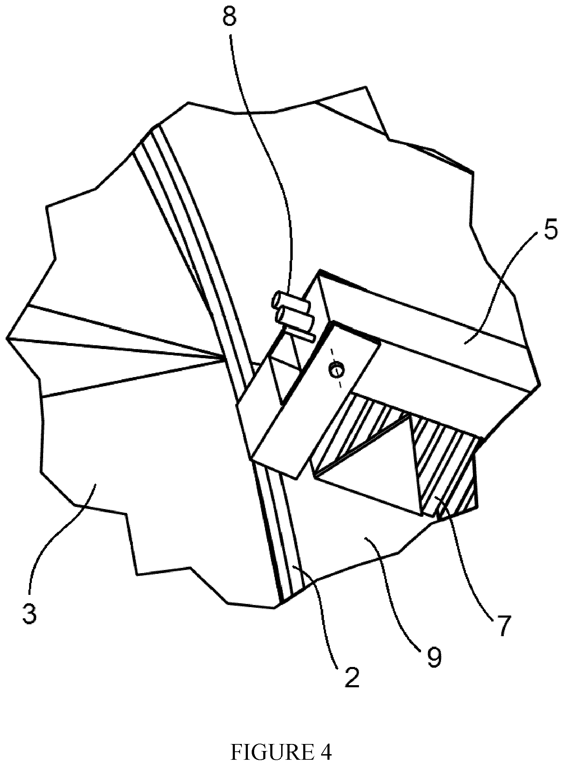

Additionally, the cleaning system 1 comprises at least one fresh water connector 8 for supplying at least one of the first part 5, the second part 6, the third part 11 and the fourth part 12 with fresh water for cleaning the surface 9 of the object 3 as illustrated in FIGURE 4. The fresh water connector 8 may be connected to a fresh water supply system (not shown) of the ship, for example by a hose. At least one of the first part 5, the second part 6, the third part 11 and the fourth part 12 may comprise a plurality of fresh water outlets 20. The cleaning system 1 is configured to guide fresh water from the at least one fresh water connector 8 to the plurality of fresh water outlets 20. According to certain embodiments, fresh water with a pressure of less than 10 bar is provided to the fresh water connector 8. In other words, the fresh water supply system of the ship may be used for cleaning of the surface 9. It is not required to provide water for cleaning the surface 9 with high pressure. According to certain other embodiments, fresh water with a water pressure of more than 10 bar or more than 15 bar is received by the fresh water connector. The water pressure may be in the range between 100 - 200 bar, for instance. The water can then be sprayed under high pressure to the surface to be cleaned. The water outlets 20 may be designed as spray nozzles in such a case.

The shown cleaning system 1 is configured to move along a curved surface 9 formed by a plurality of window elements 21. Cleaning of the window elements 21 can take place by utilizing water and the cleaning elements. No further additives need to be used. An environment friendly cleaning system 1 for cleaning of complex three-dimensional structures is provided in accordance with the shown embodiment. Of course, a cleaning agent may be also used under certain circumstances.

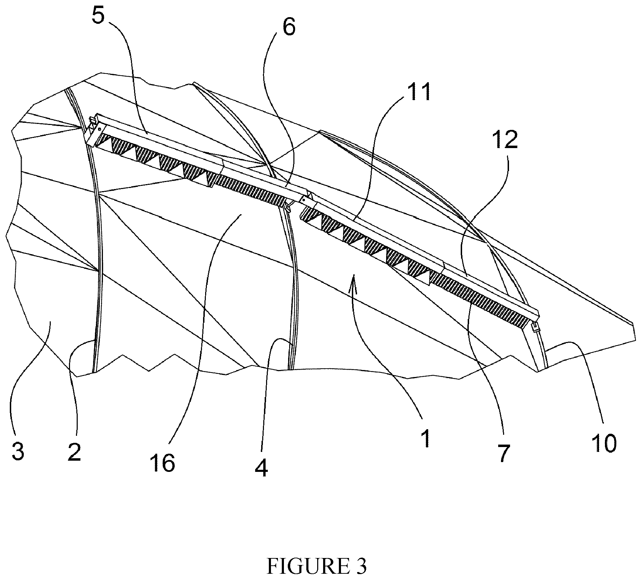

In FIGURE 3 a schematic perspective view of another cleaning system 1 in accordance with at least some embodiments of the present invention is illustrated.

In FIGURE 4 a schematic perspective view of a first detail of a cleaning system 1 in accordance with at least some embodiments of the present invention is illustrated. The cleaning system 1 comprises at least one fresh water connector 8 for supplying at least one of the first part 5, the second part 6, the third part 11 and the fourth part 12 with fresh water for cleaning the surface 9 of the object 3. The fresh water connector 8 is easily accessible by an operator. A hose (not shown) can be connected to the fresh water connector 8. The hose may then be connected to the fresh water supply system of the ship at the other end.

In FIGURE 5 a schematic perspective view of a second detail of a cleaning system 1 in accordance with at least some embodiments of the present invention is illustrated. The second part 6 may be coupled to the second guiding 4 via a first joint in the form of a first ball joint 13. Thus, the second part 6 is allowed to move relative to the ball joint 13 when the cleaning system 1 moves along the first guiding 2, the second guiding 4 and the third guiding 10. In other words, a self-aligning structure is provided.

Additionally, a third part 11 is coupled to the second part 6 via a second joint 14 in the form of a hinge joint. The hinge joint 14 allows orientation of the third part 11 and the fourth part 12 at an angle relative to the first part 5 and the second part 6. The angle may be, for example, in the range between 5 - 25 degrees. Window elements 21 which are arranged at an angle relative to each other can thus be cleaned by the cleaning system 1.

In FIGURE 6 a schematic perspective view of a third detail of a cleaning system in accordance with at least some embodiments of the present invention is illustrated. The fourth part 12 is coupled to the third guiding 10 via a third joint in the form of a second ball joint 15. Thus, the fourth part 12 is allowed to move relative to the ball joint 15 when the cleaning system 1 moves along the first guiding 2, the second guiding 4 and the third guiding 10. In other words, a self-aligning structure is provided.

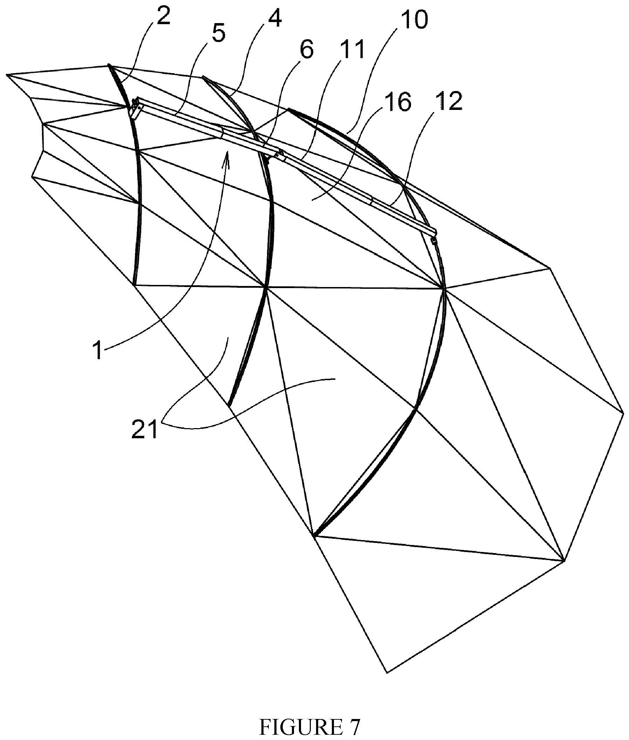

In FIGURE 7 a schematic perspective view of a further cleaning system 1 in accordance with at least some embodiments of the present invention is illustrated. The cleaning system 1 is installed to a large structure formed by a plurality of window elements 21. The window elements 21 may have different dimensions, shape, surface area, installation angle, etc. in order to form the complex structure. The first guiding 2, the second guiding 4 and the third guiding 10 are typically coupled to a frame for holding the window elements 21 of the structure. The first guiding 2, the second guiding 4 and the third guiding 10 are typically each in the form of a guide rail. The distances between the guide rails may change when moving the cleaning system 1 along the curved structure. Movability of the first part 5 relative to the second part 6 and the third part 11 relative to the fourth part 12 compensates varying distances between the guide rails when moving the cleaning system 1 along the curved structure. The cleaning area 16 is defined by the distance between the first guiding 2 and the second guiding 4, the distance between the second guiding 4 and the third guiding 10 as well as the length of the first guiding 2, the second guiding 4 and the third guiding 10.

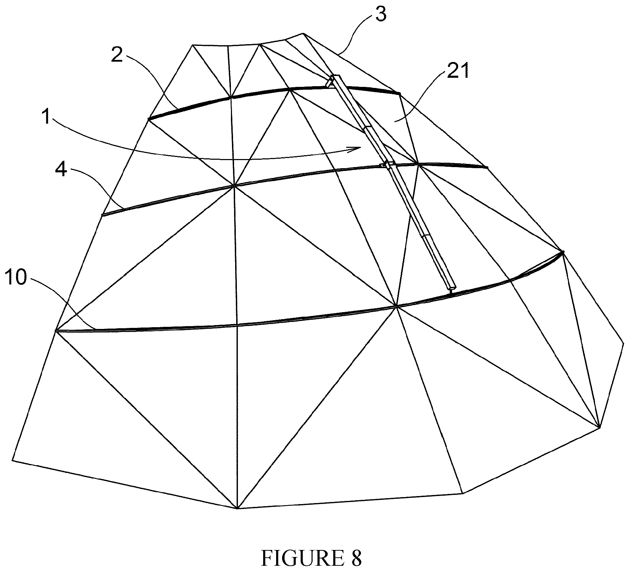

In FIGURE 8 a schematic perspective view of an even further cleaning system 1 in accordance with at least some embodiments of the present invention is illustrated. According to an embodiment, the cleaning system 1 may be remotely operated by an operator utilizing a remote control with an user interface. The user interface may comprise, for example, a joystick, one button or several buttons, or a touchscreen. Water flow may be activated and stopped, direction of movement of the cleaning system 1 may be selected and/or the speed of movement of the cleaning system may be varied via the user interface. The remote control may be wirelessly connected to the cleaning system 1.

According to another embodiment, the cleaning system 1 is carrying out a preset program. For example, the cleaning system 1 may move along the window structure once per day or several times per day. Water flow is automatically activated, the cleaning system 1 then automatically moves along the window structure and subsequently the water flow is automatically stopped. The cleaning system 1 may move back into the start position or a standby position after cleaning.

According to an even further embodiment, the cleaning system 1 is controlled by a control unit. The control unit may be, for example, a computing device. According to this embodiment, the cleaning system 1 comprises a processor, which may comprise, for example, a single- or multi-core processor. The processor may be configured, at least in part by computer instructions, to perform actions. The cleaning system 1 further comprises at least one memory. The memory may be at least in part accessible to the processor. The memory may be at least in part comprised in the processor. The memory may be means for storing information. The memory may comprise computer instructions that the processor is configured to execute. When computer instructions configured to cause the processor to perform certain actions stored in the memory, and cleaning system 1 overall is configured to run under the direction of the processor using computer instructions from the memory, the processor and/or its at least one processing core may be considered to be configured to perform said certain actions. The processor and the memory may be at least in part external to the cleaning system 1 but accessible to the cleaning system 1. For example, the control unit may be located in a control station or on a bridge of a ship. Cleaning may be controlled via the control unit. There is provided a non-transitory computer readable memory having stored thereon a set of computer implementable instructions capable of causing the computing device, in connection with the cleaning system, at least to cause activation of a water flow, cause the cleaning system to move from a first position into a second position and to cause stopping a water flow.

In FIGURE 9 specific details of a first drive system 25 of a cleaning system 1 in accordance with at least some embodiments of the present invention are illustrated. As shown, a first part 5 of a cleaning system 1 is coupled to a first guiding 2. The cleaning system 1 comprises at least a first drive system 25 configured to move parts of the cleaning system 1 along the first guiding 2, the second guiding 4 and the third guiding 10, for example. For example, the parts 5, 6, 11, 12 of the cleaning system 1 are configured to simultaneously move over a surface 9 of an object 3. The first drive system 25 is typically coupled to the first guiding 2. The first drive system 25 may, for example, comprise an electric motor and optionally a gear. Additionally, the first drive system 25 may comprise a first wheel 22, a second wheel 23 and a third wheel 24. The first wheel 22 or so-called driving wheel may be connected to the electric motor or gear. Clockwise rotation of the first wheel 22 caused by driving the electric motor results in anti-clockwise rotation of the second wheel 23 and the third wheel 24, which are both in mechanical contact with the first wheel 22. Accordingly, anti-clockwise rotation of the first wheel 22 caused by respective driving the electric motor results in clockwise rotation of the second wheel 23 and the third wheel 24, which are both in mechanical contact with the first wheel 22. The second wheel 23 and the third wheel 24 are in mechanical contact with a groove comprised by the first guiding 2. Consequently, parts 5, 6, 11, 12 of the cleaning system 1 can be moved in two directions along the first guiding 2, the second guiding 4 and the third guiding 10.

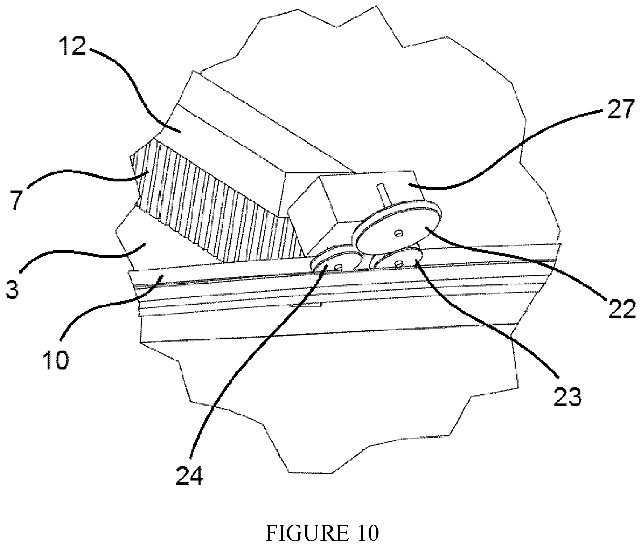

According to certain embodiments of the present invention, the cleaning system 1 comprises a second drive system as described in connection with FIGURE 10. In such a case, the cleaning system 1 may comprise an angle sensor 26. The angle sensor 26 is configured to provide information regarding the orientation of at least one of the first part 5, the second part 6, the third part 11 and the fourth part 12 relative to a reference object, a plane, or a vector such as a gravity vector. The reference object may be the first guiding 2 and the angle sensor 26 may be coupled to the first part 5, for instance. The information about the orientation of the first part 5 relative to the first guiding 2 is useful to provide input data to the second drive system coupled to the third guiding 10. Based on the input data the second drive system can be operated such that the parts 5, 6, 11, 12 are arranged perpendicular or substantially perpendicular to the first guiding 2 during operation of the cleaning system 1.

In FIGURE 10 specific details of a second drive system 27 of a cleaning system 1 in accordance with at least some embodiments of the present invention are illustrated. The second drive system 27 is configured to move parts of the cleaning system 1 along the first guiding 2, the second guiding 4 and the third guiding 10. For example, the parts 5, 6, 11, 12 of the cleaning system 1 are configured to simultaneously move over a surface 9 of an object 3. The second drive system 27 is typically coupled to the third guiding 10. The second drive system 27 may, for example, comprise an electric motor and optionally a gear. Additionally, the second drive system 27 may comprise a first wheel 22, a second wheel 23 and a third wheel 24. The first wheel 22 or so-called driving wheel may be connected to the electric motor or gear. Clockwise rotation of the first wheel 22 caused by driving the electric motor results in anti-clockwise rotation of the second wheel 23 and the third wheel 24, which are both in mechanical contact with the first wheel 22. Accordingly, anti-clockwise rotation of the first wheel 22 caused by respective driving the electric motor results in clockwise rotation of the second wheel 23 and the third wheel 24, which are both in mechanical contact with the first wheel 22. The second wheel 23 and the third wheel 24 are in mechanical contact with a groove comprised by the third guiding 10. Consequently, parts 5, 6, 11, 12 of the cleaning system 1 can be moved in two directions along the first guiding 2, the second guiding 4 and the third guiding 10.

According to certain embodiments, the second drive system 27 may be configured to be inclined relative to the fourth part 12. Thus, movability of the parts 5, 6, 11, 12 can be improved. This feature is of importance in case of complex curved structures to be cleaned. Instead or in addition also the first drive system 25 as shown in FIGURE 9 may be configured to be inclined relative to the first part 5.

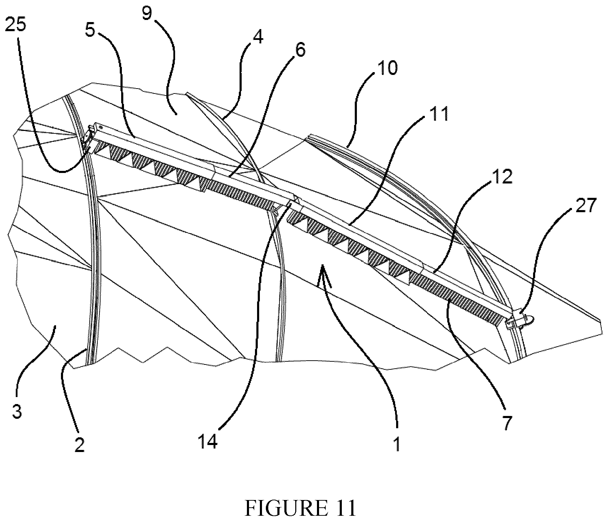

In FIGURE 11 a schematic perspective view of a yet further cleaning system 1 in accordance with at least some embodiments of the present invention is illustrated. The cleaning system 1 comprises a first guiding 2 configured to be coupled to an object 3, a second guiding 4 configured to be coupled to the object 3 such that the second guiding 4 is arranged at a distance from the first guiding 2, and a third guiding 10 configured to be coupled to the object 3 such that the third guiding 10 is arranged at a distance from the first guiding 2 and the second guiding 4.

Further, the cleaning system 1 comprises a first part 5 movably coupled to the first guiding 2, a second part 6 movably coupled to the second guiding 4, a third part 11 coupled to the second part 6, wherein the second part 6 and the third part 11 are coupled to each other via a first joint 14, and a fourth part 12 movably coupled to the third guiding 10. The first part 5 is movable relative to the second part 6 and the third part 11 is movable relative to the fourth part 12. Cleaning elements 7 are coupled to each of the first part 5, the second part 6, the third part 11 and the fourth part 12.

Additionally, the cleaning system 1 further comprises at least one of a first drive system 25 and a second drive system 27. A drive system means that it is configured to simultaneously move the first part 5, the second part 6, the third part 11 and the fourth part 12 along the first guiding 2, the second guiding 4 and the third guiding 10. Thus, the cleaning system 1 is configured to move along a curved or planar surface. For example, the parts 5, 6, 11, 12 of the cleaning system 1 are configured to simultaneously move over a surface 9 of an object 3. The surface 9 may be a window surface of a ship, for instance. Examples of first and second drive systems 25, 27 are described in connection with FIGURES 9 and 10. The first drive system 25 is typically coupled to the first guiding 2 and/or the second drive system 27 is typically coupled to the third guiding 10.

According to certain embodiments, the cleaning system 1 may additionally comprise an angle sensor as described in connection with FIGURE 9. The angle sensor is typically coupled to the first part 5 and configured to indicate the correct speed for the second drive system 27. Thus, the angle of the first part 5, the second part 6, the third part 11 and the fourth part 12 can be kept all the time perpendicular or substantially perpendicular in relation to the first guiding 2, for instance. This function is performed automatically and is part of the machine automation system.

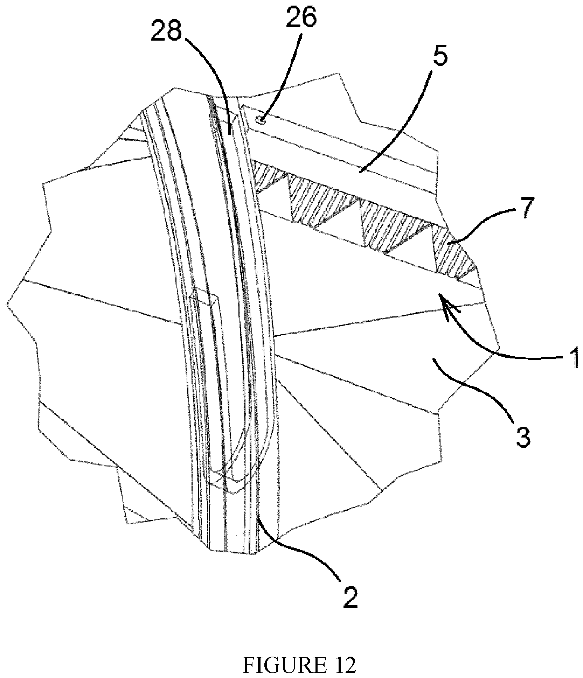

In FIGURE 12 specific details of a drive system of a cleaning system 1 in accordance with at least some embodiments of the present invention are illustrated. An energy chain 28 is shown for providing the drive system with electric energy from an energy source. The energy chain 28 guides flexible electrical cables to the electric motor of the drive system. Use of an energy chain reduces wear and stress on the cables and prevents entanglement. The cleaning system 1 comprises typically at least one energy chain 28. However, according to certain embodiments of the present invention, one energy chain 28 may be provided for each drive system of the cleaning system 1. The electric energy source may be, for example, comprised by an electric network of a ship or building.

According to certain embodiments of the present invention, the energy chain 28 also includes at least one water hose for providing fresh water to the cleaning system 1.

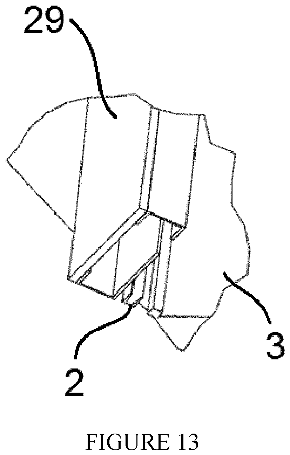

In FIGURE 13 specific details of a further drive system of a cleaning system in accordance with at least some embodiments of the present invention are illustrated. A housing 29 is shown in which the energy chain 28 of FIGURE 12 may be arranged.

It is to be understood that the embodiments of the invention disclosed are not limited to the particular structures, process steps, or materials disclosed herein. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention as defined by the appended claims.

Furthermore, the described features, structures, or characteristics may be combined in any suitable manner in one or more embodiments. In the above description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention as defined by the claims. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in cleaning of surfaces such as surfaces of buildings or window surfaces of passenger ships or cruise ships.

### REFERENCE SIGNS LIST

- 1: cleaning system
- 2: first guiding
- 3: object
- 4: second guiding
- 5: first part
- 6: second part
- 7: cleaning elements
- 8: fresh water connector
- 9: surface
- 10: third guiding
- 11: third part
- 12: fourth part
- 13: first ball joint
- 14: hinge joint
- 15: second ball joint
- 16: cleaning area
- 17: direction of movement of cleaning system
- 18: direction of movement of first part in relation to second part
- 19: direction of movement of third part in relation to fourth part
- 20: fresh water outlet
- 21: window element
- 22: first driving wheel
- 23: second driving wheel
- 24: third driving wheel
- 25: first drive system
- 26: angle sensor
- 27: second driving unit
- 28: energy chain
- 29: housing

### CITATION LIST

### Patent Literature

DE 3538078 A1

Non Patent Literature

## Claims

1. A cleaning system (1) comprising:
- a first guiding (2) configured to be coupled to an object (3),
- a second guiding (4) configured to be coupled to the object (3) such that the second guiding (4) is arranged at a distance from the first guiding (2),
- a third guiding (10) configured to be coupled to the object (3) such that the third guiding (10) is arranged at a distance from the first guiding (2) and the second guiding (4),
- a first part (5) movably coupled to the first guiding (2),
- a second part (6) movably coupled to the second guiding (4),
- a third part (11) coupled to the second part (6), wherein the second part (6) and the third part (11) are coupled to each other via a second joint (14).
- a fourth part (12) movably coupled to the third guiding (10),
- wherein the first part (5) is movable relative to the second part (6) and the third part (11) is movable relative to the fourth part (12), and wherein cleaning elements (7) are coupled to each of the first part (5), the second part (6), the third part (11) and the fourth part (12),
and wherein the system further comprises a drive system configured to simultaneously move the first part (5), the second part (6), the third part (11) and the fourth part (12) along the first guiding (2), the second guiding (4) and the third guiding (10), and wherein the parts (5, 6, 11, 12) of the cleaning system (1) are configured to simultaneously move over a curved window surface.

2. The cleaning system (1) according to claim 1, wherein the cleaning system (1) comprises at least one fresh water connector (8) for supplying at least one of the first part (5) and the second part (6) with fresh water for cleaning a surface (9) of the object (3).

3. The cleaning system (1) according to claim 2, wherein at least one of the first part (5) and the second part (6) comprises a plurality of fresh water outlets.

4. The cleaning system (1) according to claim 2, wherein the cleaning system (1) is configured to guide fresh water from the at least one fresh water connector (8) to the plurality of fresh water outlets.

5. The cleaning system (1) according to any one of claims 1-4 wherein the second part (6) is coupled to the second guiding (4) via a first joint in the form of a first ball joint (13).

6. The cleaning system (1) according to claim 1, wherein the second joint is a hinge joint (14).

7. The cleaning system (1) according to claim 1 or 6, wherein the fourth part (12) is coupled to the third guiding (10) via a third joint in the form of a second ball joint (15).

8. The cleaning system (1) according to claim 1, wherein the cleaning elements (7) comprise bristles, rubber lips, deck cloth or garment.

9. The cleaning system (1) according to any one of claims 1-8, wherein the cleaning system (1) is configured to receive fresh water with a water pressure of less than 10 bar.

10. The cleaning system (1) according to any one of claims 1-9, wherein the drive system comprises a first wheel (22) connected to an electric motor or gear, the first wheel (22) being in mechanical contact with a second wheel (23) and a third wheel (24).

11. The cleaning system (1) according to claim 10, wherein the drive system comprises a first drive system (25) and a second drive system (27).

12. The cleaning system (1) according to claim 11, wherein the first drive system (25) is coupled to the first guiding (2) and the second drive system (27) is coupled to the third guiding (10) and configured to be inclined relative to the fourth part (12).

13. The cleaning system (1) according to any one of claims 1-12, wherein the cleaning system (1) comprises an angle sensor (26) configured to provide information regarding an orientation of at least one of the first part (5), the second part (6), the third part (11) and the fourth part (12) relative to a reference object, a plane, or a vector.

14. A method for cleaning a surface (9) of an object (3), the method comprising:
- coupling a first guiding (2) to an object (3),
- coupling a second guiding (4) to the object (3) such that the second guiding (4) is arranged at a distance from the first guiding (2),
- coupling a third guiding (10) to the object (3) such that the third guiding (10) is arranged at a distance from the first guiding (2) and the second guiding (4),
- coupling a first part (5) movably to the first guiding (2),
- coupling a second part (6) movably to the second guiding (4),
- coupling a third part (11) to the second part (6), wherein the second part (6) and the third part (11) are coupled to each other via a first joint (14),
- coupling a fourth part (12) movably to the third guiding (10),
- coupling cleaning elements (7) to each of the first part (5), the second part (6), the third part (11) and the fourth part (12), and
- simultaneously moving the first part (5), the second part (6), the third part (11) and the fourth part (12) along the first guiding (2), the second guiding (4) and the third guiding (10) by a drive system, wherein the first part (5) is movable relative to the second part (6) and the third part (11) is movable relative to the fourth part (12), and wherein the parts (5, 6, 11, 12) of the cleaning system (1) are simultaneously moved over a curved window surface.

## Patentansprüche

1. Reinigungssystem (1), umfassend:
- eine erste Führung (2), die konfiguriert ist, um an einem Gegenstand (3) befestigt zu werden,
- eine zweite Führung (4), die konfiguriert ist, um an dem Gegenstand (3) derart befestigt zu werden, dass die zweite Führung (4) in einem Abstand zu der ersten Führung (2) angeordnet ist,
- eine dritte Führung (10), die konfiguriert ist, um an dem Gegenstand (3) derart befestigt zu werden, dass die dritte Führung (10) in einem Abstand zu der ersten Führung (2) und der zweiten Führung (4) angeordnet ist,
- ein erstes Bauteil (5), das an der ersten Führung (2) bewegbar befestigt ist,
- ein zweites Bauteil (6), das an der zweiten Führung (4) bewegbar befestigt ist,
- ein drittes Bauteil (11), das an dem zweiten Bauteil (6) befestigt ist, wobei das zweite Bauteil (6) und das dritte Bauteil (11) über ein zweites Gelenk (14) aneinander befestigt sind,
- ein viertes Bauteil (12), das an der dritten Führung (10) bewegbar befestigt ist,
- wobei das erste Bauteil (5) relativ zum zweiten Bauteil (6) bewegbar ist und das dritte Bauteil (11) relativ zum vierten Bauteil (12) bewegbar ist, und wobei Reinigungselemente (7) an jedem von dem ersten Bauteil (5), dem zweiten Bauteil (6), dem dritten Bauteil (11) und dem vierten Bauteil (12) befestigt sind,
und wobei das System weiter ein Antriebssystem umfasst, das konfiguriert ist, um das erste Bauteil (5), das zweite Bauteil (6), das dritte Bauteil (11) und das vierte Bauteil (12) gleichzeitig entlang der ersten Führung (2), der zweiten Führung (4) und der dritten Führung (10) zu bewegen, und wobei die Bauteile (5, 6, 11, 12) des Reinigungssystems (1) konfiguriert sind, um sich gleichzeitig über eine gekrümmte Fensteroberfläche zu bewegen.

2. Reinigungssystem (1) nach Anspruch 1, wobei das Reinigungssystem (1) mindestens einen Frischwasseranschluss (8) umfasst, um mindestens eines von dem ersten Bauteil (5) und dem zweiten Bauteil (6) zur Reinigung einer Oberfläche (9) des Gegenstands (3) mit Frischwasser zu versorgen.

3. Reinigungssystem (1) nach Anspruch 2, wobei mindestens eines von dem ersten Bauteil (5) und dem zweiten Bauteil (6) eine Vielzahl von Frischwasserauslässen umfasst.

4. Reinigungssystem (1) nach Anspruch 2, wobei das Reinigungssystem (1) konfiguriert ist, um Frischwasser von dem mindestens einen Frischwasseranschluss (8) zu der Vielzahl von Frischwasserauslässen zu leiten.

5. Reinigungssystem (1) nach einem der Ansprüche 1-4, wobei das zweite Bauteil (6) über ein erstes Gelenk in Form eines ersten Kugelgelenks (13) an der zweiten Führung (4) befestigt ist.

6. Reinigungssystem (1) nach Anspruch 1, wobei das zweite Gelenk ein Scharniergelenk (14) ist.

7. Reinigungssystem (1) nach Anspruch 1 oder 6, wobei das vierte Bauteil (12) über ein drittes Gelenk in Form eines zweiten Kugelgelenks (15) an der dritten Führung (10) befestigt ist.

8. Reinigungssystem (1) nach Anspruch 1, wobei die Reinigungselemente (7) Borsten, Gummilippen, Deckstoff oder Bekleidungsstoff umfassen.

9. Reinigungssystem (1) nach einem der Ansprüche 1-8, wobei das Reinigungssystem (1) konfiguriert ist, um Frischwasser mit einem Wasserdruck von weniger als 10 bar zu empfangen.

10. Reinigungssystem (1) nach einem der Ansprüche 1-9, wobei das Antriebssystem ein erstes Rad (22) umfasst, das mit einem Elektromotor oder Getriebe verbunden ist, wobei das erste Rad (22) in mechanischem Kontakt mit einem zweiten Rad (23) und einem dritten Rad (24) steht.

11. Reinigungssystem (1) nach Anspruch 10, wobei das Antriebssystem ein erstes Antriebssystem (25) und ein zweites Antriebssystem (27) umfasst.

12. Reinigungssystem (1) nach Anspruch 11, wobei das erste Antriebssystem (25) an der ersten Führung (2) befestigt ist und das zweite Antriebssystem (27) an der dritten Führung (10) befestigt ist und konfiguriert ist, um relativ zu dem vierten Bauteil (12) geneigt zu werden.

13. Reinigungssystem (1) nach einem der Ansprüche 1-12, wobei das Reinigungssystem (1) einen Winkelsensor (26) umfasst, der konfiguriert ist, um Informationen bezüglich einer Ausrichtung mindestens eines des ersten Bauteils (5), des zweiten Bauteils (6), des dritten Bauteils (11) und des vierten Bauteils (12) relativ zu einem Referenzgegenstand, einer Ebene oder einem Vektor bereitzustellen.

14. Verfahren zum Reinigen einer Oberfläche (9) eines Gegenstands (3), wobei das Verfahren umfasst:
- Befestigen einer ersten Führung (2) an einem Gegenstand (3),
- Befestigen einer zweiten Führung (4) an dem Gegenstand (3) derart, dass die zweite Führung (4) in einem Abstand zu der ersten Führung (2) angeordnet ist,
- Befestigen einer dritten Führung (10) an dem Gegenstand (3) derart, dass die dritte Führung (10) in einem Abstand zu der ersten Führung (2) und der zweiten Führung (4) angeordnet ist,
- bewegbares Befestigen eines ersten Bauteils (5) an der ersten Führung (2),
- bewegbares Befestigen eines zweiten Bauteils (6) an der zweiten Führung (4),
- Befestigen eines dritten Bauteils (11) an dem zweiten Bauteil (6), wobei das zweite Bauteil (6) und das dritte Bauteil (11) über ein erstes Gelenk (14) aneinander befestigt sind,
- bewegbares Befestigen eines vierten Bauteils (12) an der dritten Führung (10),
- Befestigen von Reinigungselementen (7) an jedem von dem ersten Bauteil (5), dem zweiten Bauteil (6), dem dritten Bauteil (11) und dem vierten Bauteil (12), und
- gleichzeitiges Bewegen des ersten Bauteils (5), des zweiten Bauteils (6), des dritten Bauteils (11) und des vierten Bauteils (12) entlang der ersten Führung (2), der zweiten Führung (4) und der dritten Führung (10) durch ein Antriebssystem, wobei das erste Bauteil (5) relativ zum zweiten Bauteil (6) bewegbar ist und das dritte Bauteil (11) relativ zum vierten Bauteil (12) bewegbar ist, und wobei die Bauteile (5, 6, 11, 12) des Reinigungssystems (1) gleichzeitig über eine gekrümmte Fensteroberfläche bewegt werden.

## Revendications

1. Système de nettoyage (1) comprenant :
- un premier guidage (2) configuré pour être couplé à un objet (3),
- un deuxième guidage (4) configuré pour être couplé à l'objet (3) de telle sorte que le deuxième guidage (4) soit agencé à distance du premier guidage (2),
- un troisième guidage (10) configuré pour être couplé à l'objet (3) de telle sorte que le troisième guidage (10) est agencé à distance du premier guidage (2) et du deuxième guidage (4),
- une première partie (5) couplée de manière mobile au premier guidage (2),
- une deuxième partie (6) couplée de manière mobile au deuxième guidage (4),
- une troisième partie (11) couplée à la deuxième partie (6), dans lequel la deuxième partie (6) et la troisième partie (11) sont couplées l'une à l'autre via une deuxième articulation (14),
- une quatrième partie (12) couplée de manière mobile au troisième guidage (10),
- dans lequel la première partie (5) est mobile par rapport à la deuxième partie (6) et la troisième partie (11) est mobile par rapport à la quatrième partie (12), et dans lequel des éléments de nettoyage (7) sont couplés à chacune parmi la première partie (5), la deuxième partie (6), la troisième partie (11) et la quatrième partie (12),
et dans lequel le système comprend en outre un système d'entraînement configuré pour déplacer simultanément la première partie (5), la deuxième partie (6), la troisième partie (11) et la quatrième partie (12) le long du premier guidage (2), du deuxième guidage (4) et du troisième guidage (10), et dans lequel les parties (5, 6, 11, 12) du système de nettoyage (1) sont configurées pour se déplacer simultanément sur une surface incurvée de fenêtre.

2. Système de nettoyage (1) selon la revendication 1, dans lequel le système de nettoyage (1) comprend au moins un raccord (8) pour eau douce pour alimenter au moins l'une parmi la première partie (5) et la deuxième partie (6) en eau douce pour nettoyer une surface (9) de l'objet (3).

3. Système de nettoyage (1) selon la revendication 2, dans lequel au moins l'une parmi la première partie (5) et la deuxième partie (6) comprend une pluralité de sorties d'eau douce.

4. Système de nettoyage (1) selon la revendication 2, dans lequel le système de nettoyage (1) est configuré pour guider l'eau douce depuis l'au moins un raccord (8) pour eau douce vers la pluralité de sorties d'eau douce.

5. Système de nettoyage (1) selon l'une quelconque des revendications 1-4, dans lequel la deuxième partie (6) est couplée au deuxième guidage (4) via une première articulation sous la forme d'une première articulation à rotule (13).

6. Système de nettoyage (1) selon la revendication 1, dans lequel la deuxième articulation est une articulation à charnière (14).

7. Système de nettoyage (1) selon la revendication 1 ou 6, dans lequel la quatrième partie (12) est couplée au troisième guidage (10) via une troisième articulation sous la forme d'une deuxième articulation à rotule (15).

8. Système de nettoyage (1) selon la revendication 1, dans lequel les éléments de nettoyage (7) comprennent des poils, des lèvres en caoutchouc, une toile de pont ou un vêtement.

9. Système de nettoyage (1) selon l'une quelconque des revendications 1-8, dans lequel le système de nettoyage (1) est configuré pour recevoir de l'eau douce avec une pression d'eau inférieure à 10 bar.

10. Système de nettoyage (1) selon l'une quelconque des revendications 1-9, dans lequel le système d'entraînement comprend une première roue (22) connectée à un moteur ou engrenage électrique, la première roue (22) étant en contact mécanique avec une deuxième roue (23) et une troisième roue (24).

11. Système de nettoyage (1) selon la revendication 10, dans lequel le système d'entraînement comprend un premier système d'entraînement (25) et un second système d'entraînement (27).

12. Système de nettoyage (1) selon la revendication 11, dans lequel le premier système d'entraînement (25) est couplé au premier guidage (2) et le second système d'entraînement (27) est couplé au troisième guidage (10) et configuré pour être incliné par rapport à la quatrième partie (12).

13. Système de nettoyage (1) selon l'une quelconque des revendications 1-12, dans lequel le système de nettoyage (1) comprend un capteur d'angle (26) configuré pour fournir des informations concernant une orientation d'au moins l'une parmi la première partie (5), la deuxième partie (6), la troisième partie (11) et la quatrième partie (12) par rapport à un objet de référence, un plan ou un vecteur.

14. Procédé de nettoyage d'une surface (9) d'un objet (3), le procédé comprenant les étapes consistant à :
- coupler un premier guidage (2) à un objet (3),
- coupler un deuxième guidage (4) à l'objet (3) de telle sorte que le deuxième guidage (4) est agencé à distance du premier guidage (2),
- coupler un troisième guidage (10) à l'objet (3) de telle sorte que le troisième guidage (10) est agencé à distance du premier guidage (2) et du deuxième guidage (4),
- coupler une première partie (5) de manière mobile au premier guidage (2),
- coupler une deuxième partie (6) de manière mobile au deuxième guidage (4)
- coupler une troisième partie (11) à la deuxième partie (6), dans lequel la deuxième partie (6) et la troisième partie (11) sont couplées l'une à l'autre via une première articulation (14),
- coupler une quatrième partie (12) de manière mobile au troisième guidage (10),
- coupler des éléments de nettoyage (7) à chacune parmi la première partie (5), la deuxième partie (6), la troisième partie (11) et la quatrième partie (12), et
- déplacer simultanément la première partie (5), la deuxième partie (6), la troisième partie (11) et la quatrième partie (12) le long du premier guidage (2), du deuxième guidage (4) et du troisième guidage (10) par un système d'entraînement, dans lequel la première partie (5) est mobile par rapport à la deuxième partie (6) et la troisième partie (11) est mobile par rapport à la quatrième partie (12), et dans lequel les parties (5, 6, 11, 12) du système de nettoyage (1) sont déplacées simultanément sur une surface incurvée de fenêtre.
